Europäisches Patentamt

European Patent Office

Office européen des brevets

(11) Publication number: **0 352 661**
**A1**

## (12) EUROPEAN PATENT APPLICATION

(21) Application number: **89113465.2**

(22) Date of filing: **21.07.89**

(51) Int. Cl.4: **F16D 25/14 , F02N 11/08**

(30) Priority: **29.07.88 IT 6771988**

(43) Date of publication of application:
**31.01.90 Bulletin 90/05**

(84) Designated Contracting States:
**CH DE ES FR GB IT LI NL SE**

(71) Applicant: **IVECO FIAT S.p.A.**
**Via Puglia 35**
**I-10156 Torino(IT)**

(72) Inventor: **Messori, Pier Paolo**
**Via Roma, 5/1**
**I-10025 Pino Torinese(IT)**
Inventor: **Viola, Paolo**
**Via Sismonda, 10/6**
**I-10100 Torino(IT)**

(74) Representative: **Bongiovanni, Guido et al**
**STUDIO TORTA Società Semplice Via Viotti 9**
**I-10121 Torino(IT)**

(54) **Safety device for automatically locking a vehicle clutch pedal in the clutch disengagement position.**

(57) A safety device (1) comprising a locking lever (27) pivoted on a fixed pin (29) and mobile between a restraint position in which its tooth (38) intercepts and locks a vehicle clutch pedal (2) and a position in which it is released from pedal (2); the locking lever (27) is operated by a pneumatic cylinder (33) which is controlled by an electropneumatic circuit comprising a pressure switch connected to the reservoir of the vehicle pneumatic system, and which retains it in the restraint position if on starting the engine the pressure in said reservoir is less than a predetermined threshold value sufficient for correct operation of pneumatic actuators of the vehicle gearbox.

Fig. 2

Xerox Copy Centre

# SAFETY DEVICE FOR AUTOMATICALLY LOCKING A VEHICLE CLUTCH PEDAL IN THE CLUTCH DIS-ENGAGEMENT POSITION

This invention relates to a safety device for an industrial vehicle, and in particular a device for preventing accidents connected with unforeseen pressure loss in the vehicle pneumatic system.

Industrial vehicles are known to be provided with a pneumatic system for feeding various users.

Such vehicles are also frequently provided with a gearbox in which the various gears are engaged by pneumatic actuators fed from a reservoir of said pneumatic system, by way of convenient control means.

The pneumatic actuators require a feed pressure exceeding a minimum threshold value, below which they are unable to overcome the resistance opposing the action for which they are provided, and in particular, in the specified case, the engagement or disengagement of the corresponding gear, and this can result in serious accidents as described hereinafter.

In this respect, if a vehicle with a seal defect is left stationary for a curtain time with its engine switched off but in gear, the compressor obviously does not operate with the result that the pressure in the pneumatic circuit can fall below said threshold value. In such a case, the driver on starting depresses the clutch pedal, returns the gear lever to its neutral position (in industrial vehicles this operation is normally required to enable the starting electrics to operate) and then starts the engine. If the pressure is insufficient as described, putting the gear lever into the neutral position does not actually disengage the gear, and thus if the driver now releases the clutch pedal expecting to be in neutral, the vehicle can lurch forward during starting, with serious consequences if people, vehicles or obstacles in general are in the vicinity.

The object of the present invention is to provide a safety device which prevents said drawback occurring.

Said object is attained according to the present invention by a safety device for a vehicle provided with a pneumatic system and a gearbox controlled by pneumatic actuators, characterised by comprising means for arresting the vehicle clutch pedal in a position in which said clutch is disengaged, which are mobile between a first restraint position in which they cooperate with said clutch pedal and a second position in which they are released from said clutch pedal, and operating and control means for retaining said arresting means in said restraint position if the pressure in said pneumatic system is less than a predetermined threshold value sufficient for correct operation of said pneumatic actuators.

The present invention will be more apparent from the description of a preferred embodiment thereof given hereinafter by way of non-limiting example with reference to the accompanying drawings in which:

Figure 1 is a side elevational view of a safety device constructed in accordance with the present invention;

Figure 2 is a front elevational view of the device of Figure 1; and

Figure 3 is an electropneumatic operating and control circuit for the device of Figures 1 and 2.

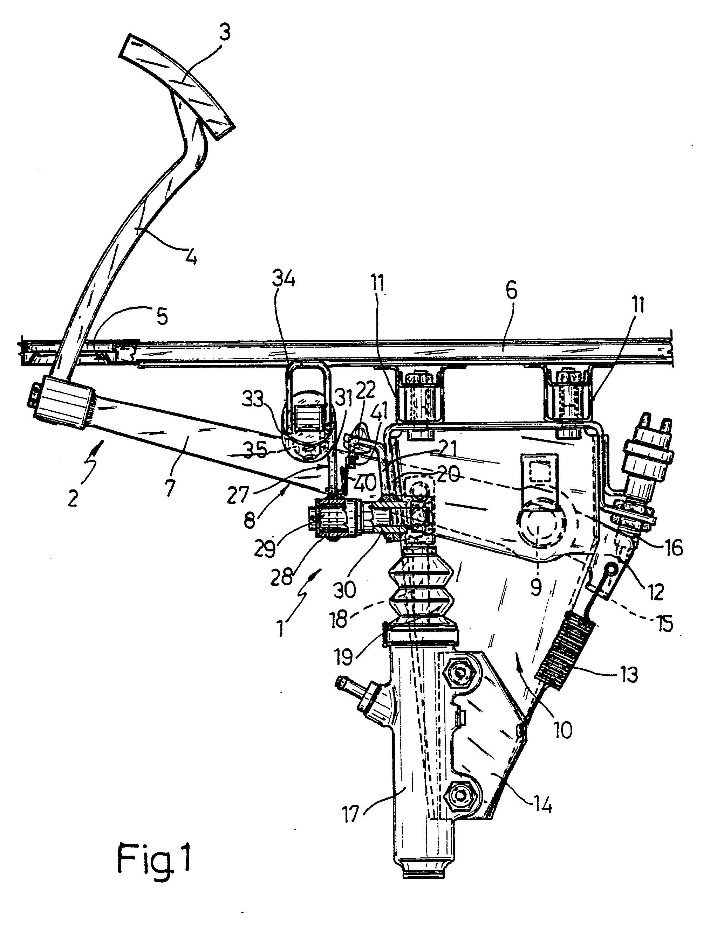

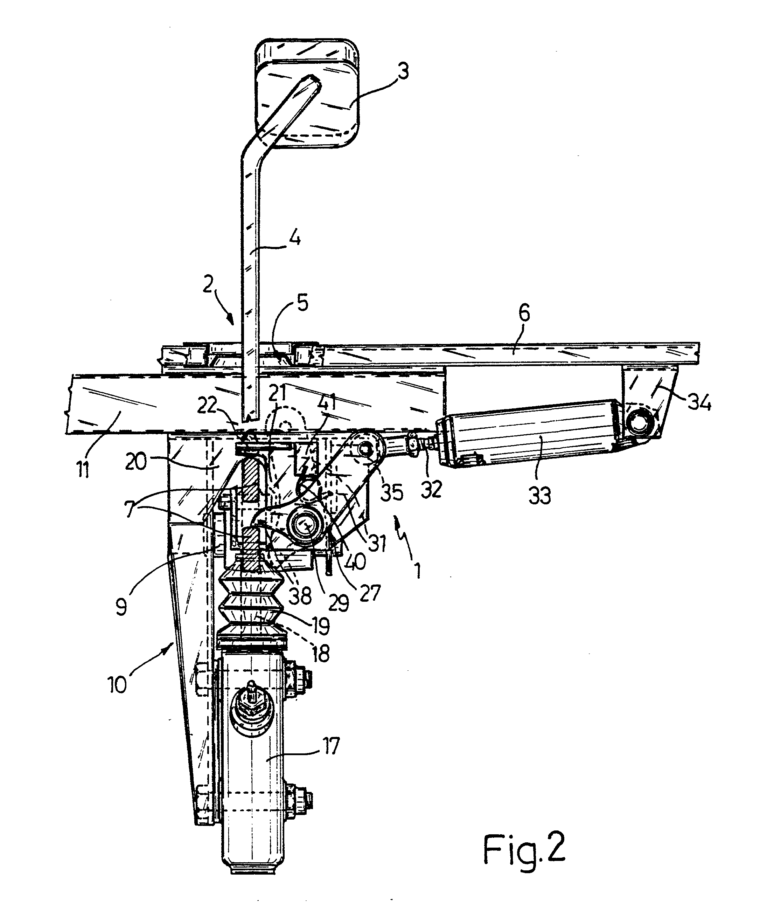

In Figures 1 and 2 the reference numeral 1 indicates overall a safety device for automatically locking a clutch pedal 2 of a vehicle, particularly an industrial vehicle, in the case of insufficient pressure in the vehicle pneumatic circuit on starting the engine.

The clutch pedal 2 comprises in known manner a tread plate 3 supported by a rod 4 mobile through an aperture 5 provided in the vehicle floor 6.

The rod 4 is rigidly fixed below the floor 6 to the end of the longer arm 7 of a substantially straight lever 8 disposed longitudinally to the vehicle and pivoted by a pin 9 on the side walls of a sheet-metal support box 10 fixed to a pair of lower cross-members 11 of the floor 6. The lever 8 comprises opposite the arm 7 a shorter arm 12 to which there is fixed one end of a return spring 13, the other end of which is fixed to a bracket 14 rigid with the support box 10. The shorter arm 12 of the lever 8 also comprises a bent terminal portion 15 arranged to cooperate with a proximity sensor 16, such as a microswitch, for sensing the position of the clutch pedal as explained hereinafter.

The lever 8 operates a hydraulic cylinder 17 for servocontrol of the vehicle clutch, not shown. Said cylinder 17 is fixed to the support box 10 in a substantially vertical position and is provided with an upwardly extending rod 18 protected by bellows 19 and hinged to the longer arm 7 of the lever 8 in proximity to the pin 9.

A bracket 21 supporting an upper limit stop block 22 for the lever 8 is welded to the front wall 20 of the box 10.

According to the present invention, the device 1 comprises a locking lever 27 mounted rotatable by way of a bearing 28 on a pin 29 housed in a bush 30 welded to the front wall 20 of the support box and to the bracket 21. The lever 27 can rotate about the pin 29 in a plane substantially orthogonal to the plane in which the arm 7 of the lever 8 lies. The lever 27 comprises an arm 31 connected by way of a ball joint 35 to one end of the rod 32 of a double-acting pneumatic cylinder 33 hinges to a bracket 34 fixed to the underside of the floor 6, and a tooth 38 of upwardly convex arcuate profile which intercepts the arm 7 of the lever 8.

Specifically (Figure 2), the cylinder 33 is dimensioned so that when the rod 32 is in its completely retracted position (full-line position), the locking lever 27 is disposed so that its tooth 38 intercepts the arm 7 of the lever 8, whereas when the rod 32 is in its position of maximum extraction (dashed-line position) the lever 27 disengages the arm 7. The ends of a helical bending spring 40 are secured to the arm 31 of the lever 27 and to a portion 41 of the bracket 21 respectively, so as to force the lever 27 towards the two opposite end-of-travel positions, according to the position of the lever itself. Specifically, starting from the position shown in full lines and hereinafter called the "restraint position" for brevity, the spring 40 opposes the rotation of the lever 27 until this rotation brings the point at which the spring 40 engages the arm 31 into a plane defined by the point at which the spring 40 engages the portion 41 of the bracket 21 and the axis of the pin 29. If the lever 27 passes beyond this neutral point, the action of the spring 40 tends to make the lever 27 snap into the dashed-line or "release" position. Figure 2 shows in cross-section the two positions of the arm 7 of the lever 8 when the pedal 2 is released (upper position) and when the pedal 2 is depressed.

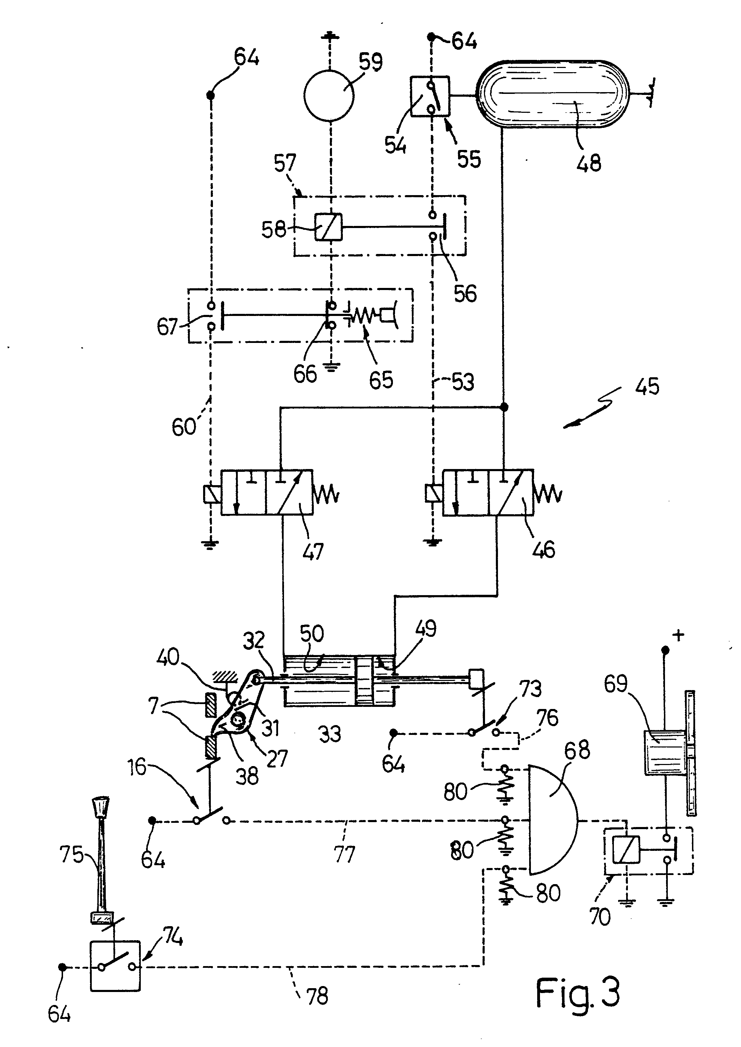

Figure 3 shows a schematic electropneumatic circuit 45 for controlling the device 1. The circuit 45 comprises a pair of normally closed three-way, two position solenoid valves 46, 47. The solenoid valves 46, 47 are connected on their suction side to a reservoir 48 of the vehicle pneumatic system, which is pressurized by a compressor, not shown, and is arranged to feed all the vehicle pneumatic users (brakes, gear actuators, etc.), and are connected on their delivery side to the rear and front chambers 49, 50 of the cylinder 33.

The solenoid valve 46 is energized through a first control line 53 in which there act a normally open contact 54 of a pressure switch 55 connected to the reservoir 48 and a normally open contact 56 of a relay 57. The pressure switch 55 is set so as to close the contact 54 when the pressure in the reservoir 48 exceeds a predetermined threshold, conveniently 7.5 bars, which ensures correct operation of the gear actuators.

The coil 58 of the relay 57 is connected in series with the vehicle electricity generator 59. The solenoid valve 47 is energized through a second control line 60. The control lines 53 and 60 and other lines feeding the enabling signals described hereinafter are powered at the vehicle battery voltage, and are fed only when the ignition key is turned. On the schematic circuit the reference numeral 64 is therefore used to indicate several equal-voltage points at one terminal of the electric switch (not shown) operated by the key, the other terminal of which is connected to the positive terminal of the battery. The circuit 45 also comprises an engine cutout pushbutton 65 provided with a normally closed contact 66 in series with the coil 58 of the relay 57 and a normally open contact 67 acting on the second control line 60.

Finally, the circuit 45 comprises a plurality of sensor means which sense that suitable safety conditions exist and feed respective enabling signals to an AND gate 68 which enables the powering of the starter motor 69 by energizing a relay 70 when these enabling signals are all active. Said sensor means consist specifically of a sensor 73 which senses the position of the rod 32 of the cylinder 33, said sensor 16 which senses the position of the clutch pedal 2, and a sensor 74 which senses the position of the gear lever 75. In Figure 3 the cylinder is shown diagrammatically with a through rod in order to make it easier to represent the sensor 73. This configuration is however illustrated purely by way of example. The sensor 73 generates a signal when said rod 32 is in its retracted position, ie the lever 27 is in its restraint position. The sensor 16 generates a signal when the pedal is in its depressed position. The sensor 74 generates a signal when the gear lever 75 is in its neutral position. Said sensor conveniently consist of normally open microswitches acting on respective control lines 76, 77, 78 powered at the system voltage (when the key is turned) and connected to the AND gate 68 and to the reference potential by way of respective resistors 80.

The operation of the device 1 is as follows.

On turning the key, all the points 64 of the circuit 45 are at the same potential as the positive pole of the battery. The valve is de-energised (contact 67 open) but the cylinder has its rod 32 in the retracted position, as explained hereinafter, and thus the lever 27 is in its restraint position. The signal of the sensor 73 is therefore enabling.

To be able to start the engine the other enabling signals must also be available, ie the clutch pedal 2 must be depressed and the gear lever 75 be in its neutral position.

If the pressure conditions in the reservoir 48 are normal, ie the pressure exceeds 7.5 bars, the contact 54 of the pressure switch 55 is closed. As the generator 59 is active and the cutout button 65 obviously in its rest state (and thus the contact 66 closed), the coil 58 of the relay 57 is energized and the contact 56 closes. The solenoid valve 46 is therefore energized and feeds the chamber 49 of the cylinder 33 to cause the rod 32 to extend. After the engine has started, the pedal 2 can therefore be released in the conventional manner. It will be noted that during the initial part of the stroke of the rod 32 the rotation of the lever 27 is opposed by the spring 40, for the reasons explained hereinafter. On passing beyond said neutral point, the spring acts in the same direction as the rod 32 to stabilize the lever 27 in its release position during vehicle running. This excludes the possibility, however remote, of the lever 27 accidentally moving into the restraint position during running, and prevents re-engagement of the clutch after a gear change in the case of a fault in the valve 46 or in the feed pipe which connects it to the chamber 43 of the cylinder 33.

In contrast, if on starting the engine the pressure in the reservoir 48 is insufficient, the pressure switch 55 is open and the valve 46 is de-energized. Consequently, the cylinder rod 32 remains in its retracted position and the lever 27 in the restraint position. When the clutch pedal 2 is depressed, the arm 7 of the lever 8 intercepts the tooth 38 of the locking lever 27 and slides on it to rotate it (in the anticlockwise direction of Figure 2 or 3) against the action of the spring 40. When the arm 7 passes beyond the vertex of the tooth 38 in a downward direction, the lever 27 snaps back into its restraint position by the return action of the spring 40 and locks the arm 7 of the lever 8, ie the clutch pedal 2, in its depressed or clutch-disengagement position. The rotation imposed by the arm 7 on the lever 27 is of small angular width, so as not to attain said neutral point in which the direction of rotation imposed on the lever 27 by the spring 40 is reversed.

The spring 40 is sized to overcome the adhesion forces acting on the piston of the cylinder 33. Consequently, the clutch cannot be re-engaged or the vehicle started until the compressor has recharged the reservoir 48 to a pressure sufficient to operate the gearbox actuators, ie 7.5 bars. When this occurs, the pressure switch 55 closes and the solenoid valve 46 operates the cylinder 33 which moves the lever 27 into the release position, as heretofore described.

As stated, for obvious safety reasons the starter motor cannot be started until, amongst other things, it is enabled by the locking lever 27 being in its restraint position. This ensures complete effectiveness of the device 1. The rod 32 of the cylinder 33 must therefore be returned to its retracted position each time the engine is switched off. This is done by the cutout pushbutton 65, which on being pressed opens the contact 66 to de-energize the relay 57 and consequently the solenoid valve, and closes the contact 67 to energize the solenoid valve 47 which feeds the front chamber 50 of the cylinder 33. The valve 47 is then de-energized on releasing the pushbutton 65 and extracting the ignition key. The lever 27 is retained in its restraint position by the effect of the spring 40.

The advantages of the device 1 constructed in accordance with the present invention are apparent from an examination of its characteristics. In particular, the risk of accidents connected with the non-operation of the pneumatic gearbox actuators following pressure reduction in the vehicle pneumatic system is eliminated.

Finally, it is apparent that modifications which do not leave the scope of protection of the present invention can be made to the device 1. In particular, the shape and arrangement of the locking lever 27 and spring 40 can be changed. The control circuit 45 and the operating means for the lever 27 can be formed in any other convenient manner.

## Claims

1. A safety device for a vehicle provided with a pneumatic system and a gearbox controlled by pneumatic actuators, characterised by comprising means (27) for arresting the vehicle clutch pedal (2) which are mobile between a first restraint position in which they cooperate with said clutch pedal (2) to retain it in a position in which said clutch is disengaged and a second position in which they are released from said clutch pedal (2), and operating and controlling means (33, 45) for retaining said arresting means (27) in said restraint position if the pressure in said pneumatic system is less than a predetermined threshold value sufficient for correct operation of said pneumatic actuators, and for moving said arresting means (27) into said release position if said pressure exceeds said threshold value.

2. A device as claimed in claim 1, characterised in that said arresting means comprise a locking lever (27) pivoted on a fixed pin (29) provided with an engagement portion (38) arranged to cooperate with a lever (8) of said clutch pedal (2).

3. A device as claimed in claim 2, characterised by comprising elastic means (40) acting on said locking lever (27) and arranged to stabilize said locking lever (27) in said restraint position if undergoing a first part of its travel, and in said release portion if undergoing the second part of its of said travel.

4. A device as claimed in claim 3, characterised in that said engagement portion of said locking lever (27) comprises an arcuate tooth (38) on which said lever (8) of said clutch pedal (2) can slide to cause said locking lever (27) to rotate against the action of said elastic means (40).

5. A device as claimed in claim 3 or 4, characterised in that said elastic means comprise a helical bending spring (40), the ends of which are secured respectively to a first point of the locking lever (27) and to a second point on a fixed support (41), so that during the rotation of said locking lever (27) said first point passes beyond a plane defined by the axis of said fixed pivot pin (29) of said locking lever (27) and said second point.

6. A device as claimed in any one of the preceding claims, characterised in that said operating and control means comprise a pneumatic cylinder (33), the rod (32) of said cylinder being connected to an arm (31) of said locking lever (27) and arranged to cause it to rotate between said restraint position and said release position.

7. A device as claimed in claim 6, characterised in that said operating and control means (45) comprise at least one solenoid valve (46, 47) for controlling said pneumatic cylinder (33), said solenoid valve (46, 47) being conducted to a reservoir of said pneumatic system.

8. A device as claimed in claim 7, characterised in that said operating and control means (45) comprise a first control line (53) for said solenoid valve (46) arranged to switch said solenoid valve (46) into a position such that it operates said cylinder (33) in the direction which causes said locking lever (27) to rotate towards its release position, and a second control line (60) for said solenoid valve (47) arranged to switch said solenoid valve (47) into a position such that it operates said cylinder (33) in the direction which causes said locking lever (27) to rotate towards said restraint position.

9. A device as claimed in claim 8, characterised in that said operating and control means (45) comprise a pressure switch (55) in series with said first control line (53) and connected to said reservoir (48).

10. A device as claimed in claim 8 or 9, characterised in that said operating and control means (45) comprise normally open switch means (67) for said second control line (60) which are controlled by a vehicle engine cutout pushbutton (65).

11. A device as claimed in claim 10, characterised in that said operating and control means (45) comprise switch means (57) for said first control line (53) which are controlled by said engine cutout pushbutton (65).

12. A device as claimed in claim 11, characterised in that said switch means (57) for said first control line (53) comprise a relay (57) with a normally open contact (56) and having its coil (58) connected in series with the vehicle voltage generator (59) and with a normally closed contact (66) of said engine cutout pushbutton (65).

13. A device as claimed in any one of claims 8 to 12, characterised in that said operating and control means (45) comprise two normally closed solenoid valves (46, 47) energized into their open state by said respective control lines (53, 60).

14. A device as claimed in any one of preceding claims, characterised by comprising sensor means (16, 73, 74) arranged to produce respective enabling signals for the powering of the starter motor (69) of said engine.

15. A device as claimed in claim 14, characterised in that said sensor means comprise a sensor (73) for sensing when the position of said rod (32) of said cylinder (33) is that for which said locking lever (27) is in said restraint position.

16. A device as claimed in claim 14 or 15, characterised in that said sensor means comprise a sensor (74) for sensing when the vehicle gear lever (75) is in its neutral position.

17. A device as claimed in one of claims 14 to 16, characterised in that said sensor means comprise a sensor (16) for sensing when said clutch pedal (2) is in the clutch disengagement position.

Fig.1

Fig.2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 513 439 (AINSWORTH) --- | | F 16 D 25/14 <br> F 02 N 11/08 |
| A | FR-A- 799 595 (BOWDEN) ------ | | |

TECHNICAL FIELDS
SEARCHED (Int. Cl.5)

F 16 D 25/00
B 60 K 41/00
F 02 N 11/00

The present search report has been drawn up for all claims

| Place of search | Date of completion of the search | Examiner |
|---|---|---|
| THE HAGUE | 31-10-1989 | BALDWIN D.R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)